# EUROPÄISCHE PATENTSCHRIFT

(11) **EP 0 881 384 B1**
(45) Veröffentlichungstag und Bekanntmachung des Hinweises auf die Patenterteilung: **20.10.2004**
(21) Anmeldenummer: 98109506.0
(22) Anmeldetag: 26.05.1998
(51) Int. Cl.: F03D 11/00

(54) **Rotor für eine Windkraftmaschine**
Windturbine rotor
Rotor d'éolienne

(30) Priorität: 28.05.1997 DE 29709342 U
(43) Veröffentlichungstag der Anmeldung: 02.12.1998
(73) Patentinhaber: Firma Holger Müller, 01855 Sebnitz (DE)
(72) Erfinder: Müller, Holger, 01855 Sebnitz (DE)
(74) Vertreter: Heyner, Klaus, Dr.

(56) Entgegenhaltungen:
- EP-A- 0 543 266
- EP-A- 0 640 714
- US-A- 4 247 258

## Beschreibung

Die Erfindung betrifft einen Rotor für eine Windkraftmaschine , die die Energie des natürlichen Windes in nutzbare mechanische Energie, die vorrangig weiter in elektrische Energie umgewandelt wird , umwandelt.

Der Rotor , insbesondere die Rotorblätter, ist das Bauteil der Windkraftmaschine , dass vom Wind beaufschlagt wird und demzufolge besonderen Beanspruchungen ausgesetzt ist.

Der Rotor, insbesondere die Rotorblätter für Windkraftmaschinen werden überwiegend aus glasfaserverstärkten duroplastischen Kunststoffen hergestellt. Für die Erhöhung der Beanspruchbarkeit und der Festigkeit der Formteile aus UP (Ungesättigtem Polyesterharz) oder EP (Epoxidharz) - Glasfaser-Laminaten ist es möglich, einen Teil der Glasfasern (GF) durch Aramid - oder Kohlenstofffasern (CF) zu substituieren.

Für die Rotoren wird eine Lebensdauer von cirka 20 Jahren projektiert. Um diese projektierte Lebensdauer zu erreichen, ist es unabdingbar, die Rotorblätter vor zerstörerischen Beanspruchungen , insbesondere durch UV-Strahlung, Temperaturwechselbeanspruchungen, Wasser in verschiedenen Aggregatzuständen welches nicht selten in Verbindung mit Salzen sowie Chemikalien oder auch als saurer Regen auftritt, zu schützen.

Es ist Stand der Technik, Rotoren mit Anstrich- und Beschichtungssystemen auf der Basis von Kunststoffen zu beschichten, um sie einerseits vor aggressiven Medien zu schützen und andererseits ästhetischen Anforderungen zu entsprechen. Diese Anstrichsysteme sind in ihrem Aufbau auf den Formstoff, den Kunststoff aus dem der

Rotor hergestellt ist, abgestimmt.

Aus der US-A-4 247 258 ist ein Rotorblatt für eine Windkraftmaschine bekannt, welches in einer speziellen Art und Weise mit einem speziellen Querschnitt angefertigt wird und welches in der Endbehandlung beispielsweise mit einem Polyurethanüberzug versehen wird.

Den bekannten Anstrich- und Beschichtungssystemen sind jedoch in ihrer Wirksamkeit und Lebensdauer Grenzen gesetzt. Diese Grenzen leiten sich ganz natürlich aus der Beständigkeit des organischen Beschichtungsmaterials, meist einem zum Zweck der Verarbeitbarkeit zuvor in Lösung befindlichen Kunststoff, ab Demgegenüber ist aus der EP-A-0 640 714 eine Antihaftbeschichtung für ein Bügeleisen offenbart, welche auf die besonderen Anforderungen bezüglich der Temperatur und Haftungseigenschaften für Bügeleisen optimiert ist.

Die im Stand der Technik bekannten Maßnahmen von Anstrich und Beschichtung sind jedoch nur bedingt geeignet, die Oberfläche eines Rotors für Windkraftmaschinen langzeitlich vor einer zunehmenden Rauhigkeit, die mit der Bildung von Haarrissen an der Oberfläche beginnt, zu schützen. Die stetig fortschreitende Zunahme der Rauhigkeit, die eine Folge der Alterung ist, ausgelöst durch die UV-Beständigkeit bzw. UV-Beanspruchung, erfordert in immer kürzeren Intervallen die Durchführung kostenaufwendiger Reinigungs- und Wartungsmaßnahmen. Ferner führt eine ungewollte raue Oberfläche zu einer Leistungsminderung von cirka 8%.

Der Erfindung liegt somit die Aufgabe zugrunde, einen verbesserten Rotor für eine Windkraftmaschine zu schaffen.

Die Aufgabe der Erfindung wird dadurch gelöst, dass der Rotor eine mittels eines Sol-Gel-Prozesses aufgebrachte antiadhäsive Beschichtung aufweist und dass die antiadhäsive Beschichtung aus einer Nanokomposit-Gradientenschicht besteht, welche eine keramikähnliche Oberfläche bildet, und wobei das Beschichtungsmaterial fluorierte organische Seitenketten aufweist.

Die antiadhäsive Beschichtung weist vorzugsweise eine Schichtdicke von weniger als 20 µm auf. Gemäß einer vorteilhaften Ausgestaltung der Erfindung ist die antiadhäsive Beschichtung transparent ausgeführt. Nach einer weiteren vorteilhaften Ausgestaltung ist die antiadhäsive Beschichtung als Niedrigenergieoberfläche ausgeführt. Niedrigenergieoberflächen weisen eine Oberflächenspannung von weniger als 22 mN/m auf. Von besonderem Vorteil ist die Ausführung der antiadhäsiven Beschichtung auf nanotechnologischer Basis.

Unter einem Sol-Gel-Prozess ist ein Verfahren zu verstehen, bei dem aus zunächst löslichen Verbindungen über die Zwischenstufe eines Gels schließlich keramische Massen oder Gläser erhalten werden. Gleichfalls werden Sol-Gel-Prozesse verwendet, um Überzüge zu erzeugen. Vielfältige Nanomaterialien werden mit dem Sol-Gel-Prozess hergestellt, da sich dieser Prozess für die chemische Nanotechnologie ideal gestalten und programmieren lässt.

Unter einer Nanokomposit-Gradientenschicht ist ein erfindungsgemäße Beschichtung auf der Oberfläche eines Rotors oder Rotorblattes zu verstehen, welche durch die Wechselwirkung der Nanopartikel mit der Oberfläche und der Umgebung selbsttätig eine Gradientenschicht ausbildet. Der Effekt der selbsttätigen Ausbildung derartiger Gradientenschichten ist ein im Stand der Technik bekannter Effekt bei relativ dünnen Beschichtungen.

Die Vorteile der Erfindung bestehen darin, dass die Oberfläche des Rotors langzeitlich schmutz-und chemikalienabweisend ist und darüber hinaus von hoher Kratz- und Abriebfestigkeit geprägt ist und weiterhin eine hohe UV-Stabilität gegeben ist.

Ferner soll die Oberfläche des Rotors gegen eine Haarrissbildung geschützt sein. Haarrisse begünstigen eine Verschmutzung und Schmutz-Schichtaufbau, der die Effizienz der Windkraftmaschine beeinträchtigt und ihren Wirkungsgrad herabsetzt.

Von einer Haarrissbildung, dem Grunde nach handelt es sich um eine Spannungsrissbildung, geht auch eine Gefahr für den Formstoff, den Kunststoff, aus. Die erfindungsgemäße Beschichtung des Rotors mit einer multifunktionalen Hartschicht auf nanotechnologischer Basis ist transparent, korrosionsinhibierend, schlag- und beschlagfest sowie antiadhäsiv und schmutzabweisend.

Die erfindungsgemäßen Maßnahmen gewährleisten die Bereitstellung eines Rotors für eine Windkraftmaschine , dessen relativ elastische keramikähnliche Oberfläche schmutz- und chemikalienabweisend, antiadhäsiv, kratz- und abriebfest, reparatur- fähig und von hoher UV-Beständigkeit ist. Mittels der erfindungsgemäßen Maßnahmen wird der Aufwand für die Wartung der Windkraftmaschinen bedeutend gesenkt , deren Wirtschaftlichkeit erhöht und ein sauberes Erscheinungsbild gewahrt.

Die Erfindung ist keinesfalls auf die Ausführungsform Rotor bzw. Rotorblätter beschränkt. Die erfindungsgemäße Lehre, das Aufbringen bzw. das Erzeugen einer Niedrigenergieschicht, auch Easy-to-Clean-Oberfläche genannt, bietet sich auch für die Anwendung an bzw. in anderen Problembereichen an Windkraftmaschinen an, so z.B. an den Türmen und Maschinenhäusern.

Für die Herstellung, für das Aufbringen der Oberflächenschutzschicht sind die aus der Nasslack-Technologie bekannten Arbeitsverfahren, sowohl für den Auftrag der Schutzschicht als auch deren Aushärtung bzw. Trocknung geeignet.

## Patentansprüche

1. Rotor für eine Windkraftmaschine, **dadurch gekennzeichnet, dass** dieser,
a) eine mittels eines Sol-Gel-Prozesses aufbringbare
b) antiadhäsive Beschichtung aufweist und dass die antiadhäsive Beschichtung aus einer
c) Nanokomposit-Gradientenschicht besteht
d) welche eine keramikähnliche Oberfläche bildet,
e) und dass das Beschichtungsmaterial fluorierte organische Seitenketten aufweist.

2. Rotor nach Anspruch 1, **dadurch gekennzeichnet, dass** die antiadhäsive Beschichtung eine Schichtdicke von weniger als 20 µm aufweist.

3. Rotor nach Anspruch 1 oder 2, **dadurch gekennzeichnet, dass** die antiadhäsive Beschichtung transparent ausgeführt ist.

4. Rotor nach einem der Ansprüche 1 bis 3, **dadurch gekennzeichnet, dass** die antiadhäsive Beschichtung als Niedrigenergieoberfläche ausgeführt ist und eine Oberflächenspannung von weniger als 22 mN/m aufweist.

5. Rotor nach einem der Ansprüche 1 bis 4, **dadurch gekennzeichnet, dass** die antiadhäsive Beschichtung auf nanotechnologischer Basis erzeugbar ist.

## Claims

1. Rotor for a wind turbine machine, **characterised in that** said rotor surface contains a
a) Through Sol-Gel-synthesis applicable
b) Anti-adhesive coating where that said anti-adhesive coating
c) Is a nano-composite gradient coating
d) Which forms a ceramic like surface,
e) And that said coating material contains fluorinated organic side chains.

2. Rotor according to claim 1, **characterised in, that** said anti-adhesive coating has a coating thickness of less than 20 µm.

3. Rotor according to claim 1 or 2, **characterised in, that** said anti-adhesive coating is transparency.

4. Rotor according to one of the claims 1 - 3, **characterised in, that** said anti-adhesive coating is a low energy surface with a surface tension of less than 22 mN/m.

5. Rotor according to one of the claims 1 - 4, **characterised in, that** said anti-adhesive coating is synthesised on a nano-technological basic.

## Revendications

1. Rotor d'éolienne, **caractérisé en ce que** celui-ci présente un revêtement antiadhérant applicable au moyen d'un procédé sol-gel, **en ce que** le revêtement antiadhérant est composé d'une couche à gradient nano-composite laquelle forme une surface semblable à de la céramique, et **en ce que** le matériau de revêtement présente des chaînes latérales organiques fluorées.

2. Rotor selon la revendication 1, **caractérisé en ce que** le revêtement antiadhérant présente une épaisseur de couche inférieure à 20 µm.

3. Rotor selon la revendication 1 ou 2, **caractérisé en ce que** le revêtement antiadhérant est transparent.

4. Rotor selon l'une quelconque des revendications 1 à 3, **caractérisé en ce que** le revêtement antiadhérant est réalisé en tant que surface à faible énergie et présente une tension superficielle inférieure à 22 mN/m.

5. Rotor selon l'une quelconque des revendications 1 à 4, **caractérisé en ce que** le revêtement antiadhérant peut être obtenu à partir de la nano-technologie.
